# EUROPÄISCHE PATENTANMELDUNG

(11) **EP 1 517 045 A2**
(43) Veröffentlichungstag der Anmeldung: **23.03.2005**
(21) Anmeldenummer: 04020698.9
(22) Anmeldetag: 01.09.2004
(51) Int. Cl.: F04D 29/60

(54) **Verbindungselement**

(30) Priorität: 17.09.2003 DE 10342907
(71) Anmelder: Pfeiffer Vacuum GmbH, 35614 Asslar (DE)
(72) Erfinder: Fahrenbach, Peter, 35619 Braunfels (DE); Watz, Robert, 35781 Weilburg (DE)

(57) **Zusammenfassung**

Die Erfindung betrifft ein Verbindungselement zum Verbinden zweier Baugruppen, insbesondere dem Verbinden einer Vakuumpumpe mit schnelldrehendem Rotor mit einer externen Komponente. Die Pumpelemente bestehen aus feststehenden und rotierenden Bauteilen. Das Gehäuse der Pumpe ist mit Anschlussbauteilen versehen. Erfindungsgemäß weisen die aufeinander gleitenden Oberflächen des Verbindungselementes eine definierte und gleichbleibende Reibungszahl auf. Dazu werden die Oberflächen z. B. mit einer Beschichtung versehen.

## Beschreibung

Die Erfindung betrifft eine Vakuumpumpe mit schnelldrehendem Rotor nach dem Oberbegriff des 1. Schutzanspruches.

Vakuumpumpen mit schnelldrehendem Rotor, wie z. B. Turbomolekularpumpen, speichern in ihrem Rotor aufgrund dessen hoher Drehzahl große Mengen von Energie. Bei einem Rotor-/Stator-Crash wird diese Energie über feststehende Bauteile, wie z. B. Anschlussflansche oder Unterteile, an andere Anlagenbauteile abgegeben. Durch das entstehende Drehmoment kann es zu Schäden oder zur Zerstörung von Teilen der mit der Maschine verbundenen Anlage, zu einem Abreißen oder Verdrehen der Maschine an der Anlage oder zu einem Abreißen von Bauteilverbindungen in der Maschine und damit zur Gefährdung von Personen kommen.

Bei Vakuumanlagen treten bei einem Crash in der Regel Lecks auf, welche den ablaufenden Prozess so empfindlich stören, dass er abgebrochen werden muss. Auch können z. B. toxische Gase freigesetzt werden, was zur Kontamination der Umgebung führt.

Es ist üblich, Verbindungen zwischen einer Vakuumpumpe und z. B. einer Anlage durch Klammern herzustellen. Diese werden durch Klammerschrauben angezogen, wodurch eine Vorspannung zwischen den verbundenen Bauteilen entsteht. Die Vorspannung hat einen entscheidenden Einfluss auf die Verdrehsicherheit der Bauteile. Sie hängt stark von der Reibungszahl in den Gewinden und der sich berührenden Teile der Klammer ab. Die Reibungszahl selbst ist wiederum abhängig von der jeweiligen Materialpaarung und dem Oberflächenzustand. Darüber hinaus kann es bei mehrmaliger Montage durch Verschleiß zum Blockieren im Schraubengewinde oder der sich berührenden Teile der Klammer kommen. Die Vorspannung nimmt dann nach mehrmaliger Montage bei gleichbleibendem Anzugsmoment ab.

Der Erfindung liegt die Aufgabe zugrunde, eine Vakuumpumpe mit schnelldrehendem Rotor vorzustellen, bei der die Befestigungselemente eine sichere Verbindung der Vakuumpumpe, z. B. mit einer Anlage, einer Bodenbefestigung oder auch von Pumpenteilen untereinander, darstellen, die verhindern, dass bei einem Rotor-/Stator-Crash größere Schäden entstehen.

Die Aufgabe wird durch die kennzeichnenden Merkmale des 1. Schutzanspruches gelöst. Die Ansprüche 2 - 9 stellen weitere Ausgestaltungsformen der Erfindung dar.

Dadurch, dass die bei der Montage aufeinander gleitenden Oberflächen der Verbindungselemente eine definierte und gleichbleibende Reibungszahl aufweisen, bleibt die Vorspannung auch nach mehrmaliger Montage konstant. So können die Verbindungen der Vakuumpumpe mit externen Komponenten, mit Bodenbefestigungen oder zwischen einzelnen Abschnitten der feststehenden Bauteile wesentlich sicherer gestaltet werden als mit herkömmlicher Technik. Bei einem Rotor-/Stator-Crash z. B. werden größere Schäden vermieden.

Fig.: Klammerschraube als beispielhaftes Verbindungselement an einer Vakuumpumpe mit schnelldrehendem Rotor.

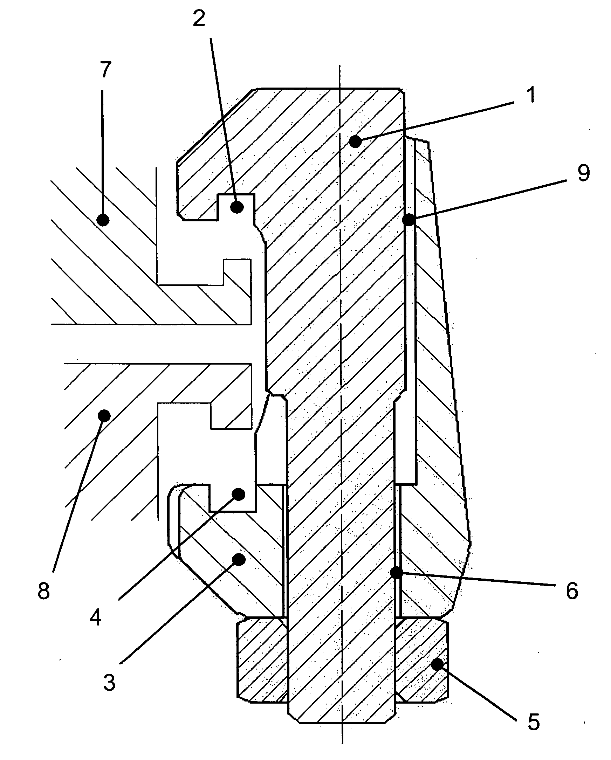

Die einzige Abbildung zeigt die erfindungsgemäße Ausgestaltung eines Verbindungselementes am Beispiel einer Klammer. Ein erstes Teil 1 der Klammer mit einer Nut 2, die mit einem Teil 7 (beispielsweise einer Vakuumanlage) in Eingriff kommt, gleitet in einem zweiten Teil 3 der Klammer. Auch dieser Teil ist mit einer Nut 4 versehen, die mit dem Flansch der Vakuumpumpe 8 in Eingriff gebracht wird. Das untere Ende des Teils 1 ist mit einem Gewinde 6 versehen, auf dem eine Mutter 5 sitzt, die zum Spannen der Teile 1 und 3 dient. Diese Teile gleiten mit ihren Oberflächen an der Stelle 9 aufeinander. Die Oberflächen des Gewindes 6 und die Flächen 9 besitzen eine definierte und gleichbleibende Reibungszahl. Dies kann durch eine gezielte Wahl der Werkstoffe oder über eine Beschichtung der Oberflächen der Bauteile realisiert werden. Die verwendeten Werkstoffe können dabei gleich aber auch unterschiedlich sein. Ein Teil oder alle der Oberflächen können eine Beschichtung aufweisen, die integrierte Schmierstoffe aufweisen.

## Patentansprüche

1. Verbindungselement zum Verbinden einer externen Komponente (7) mit einer Vakuumpumpe (8), die einen schnelldrehenden Rotor sowie stationäre Bauteile in einem Gehäuse angeordnet enthält und ein Anschlussbauteil aufweist, wobei das Verbindungselement ein erstes Teil (1), welches mit der externen Komponente (7) in Eingriff gebracht werden kann, und ein zweites Teil (3) umfasst, welches mit dem Anschlussbauteil des Gehäuses in Eingriff gebracht werden kann, wobei das erste und das zweite Teil während des Verbindens von Vakuumpumpe und externer Komponente gegeneinander verschiebbare Oberflächen (6, 9) besitzen, die eine definierte und gleichbleibende Reibungszahl aufweisen.

2. Verbindungselement nach Anspruch 1, wobei die gegeneinander verschiebbaren Flächen (6, 9) des ersten (1) und zweiten (3) Teils mit einer Beschichtung versehen sind, welche eine definierte und gleichbleibende Reibungszahl aufweist.

3. Verbindungselement nach Anspruch 1, wobei das erste (1) und das zweite (3) Teil aus einem Werkstoff bestehen, dessen Oberfläche eine definierte und gleichbleibende Reibungszahl aufweist.

4. Verbindungselement nach Anspruch 3, wobei das erste (1) und das zweite (3) Teil aus unterschiedlichen Werkstoffen bestehen, deren Oberflächen im Zusammenwirken eine definierte und gleichbleibende Reibungszahl aufweisen.

5. Verbindungselement nach Anspruch 1, wobei das Verbindungselement als Klammer ausgestaltet ist.

6. Verbindungselement nach Anspruch 2, wobei die Beschichtung integrierte Schmierstoffe beinhaltet.

7. Klammer zum Verbinden zweier Baugruppen (7, 8), die jeweils mit Anschlussbauteilen versehen sind, wobei die Klammer ein erstes Teil (1), welches mit dem Anschlussbauteil der ersten Baugruppe (7) in Eingriff gebracht werden kann, und ein zweites Teil (3) umfasst, welches mit dem Anschlussbauteil der zweiten Baugruppe (8) in Eingriff gebracht werden kann, wobei erstes (1) und zweites (3) Teil während des Verbindens der Baurgruppen gegeneinander verschiebbare Oberflächen (6,9) besitzen, die eine definierte und gleichbleibende Reibungszahl aufweisen.

8. Klammer nach Anspruch 7, wobei die jeweiligen Anschlussbauteile der beiden Teile Vorsprünge aufweisen, die in entgegengesetzte Richtung zeigen, und wobei das erste (1) und das zweite (3) Teil jeweils Nuten (4) aufweisen, die mit den Vorsprüngen beim Verbinden der Baugruppen in Eingriff kommen.

9. Klammer nach Anspruch 7, wobei das erste Teil als Klammerschraube mit einem Gewinde (6) am freien Ende ausgestaltet ist und das zweite Teil eine Öffnung besitzt, durch die das freie Ende der Klammerschraube hindurch geschoben werden kann, und wobei eine Mutter (5) auf das Gewinde des freien Endes geschraubt werden kann, um das erste und das zweite Teil zusammen zu klammern.

10. Klammer nach Anspruch 7, wobei die gegeneinander verschiebbaren Flächen (6, 9) des ersten (1) und zweiten (3) Teils mit einer Beschichtung versehen sind, welche eine definierte und gleichbleibende Reibungszahl aufweist.

11. Klammer nach Anspruch 7, wobei das erste (1) und das zweite (3) Teil aus einem Werkstoff bestehen, dessen Oberfläche eine definierte und gleichbleibende Reibungszahl aufweist.

12. Klammer nach Anspruch 11, wobei das erste (1) und das zweite (3) Teil aus unterschiedlichen Werkstoffen bestehen, deren Oberflächen im Zusammenwirken eine definierte und gleichbleibende Reibungszahl aufweisen.
